# EUROPEAN PATENT SPECIFICATION

(11) **EP 2 449 070 B1**
(45) Date of publication and mention of the grant of the patent: **15.05.2013**
(21) Application number: 10734347.7
(22) Date of filing: 30.06.2010
(51) Int. Cl.: A23D 7/02, A23L 1/015, A23L 1/29, C11B 3/10

(54) **PROCESS FOR REMOVING UNWANTED PROPANOL COMPONENTS FROM UNUSED TRIGLYCERIDE OIL**
VERFAHREN ZUR BESEITUNG UNERWÜNSCHTER PROPANOLBESTANDTEILE AUS UNBENUTZTEM TRIGLYZERIDÖL
PROCEDE D'ELIMINATION DE COMPOSANTS DU PROPANOL NON SOUHAITES A PARTIR D'UNE HUILE DE TRIGLYCERIDES NON UTILISEE

(30) Priority: 30.06.2009 EP 09164195
(43) Date of publication of application: 09.05.2012
(60) Divisional application: 13152523.0
(73) Proprietor: Sime Darby Malaysia Berhad, Kuala Lumpur, 50350 (MY)
(72) Inventor: ZIEVERINK, Martinus Mathilda Pieter, NL-1056 CV Amsterdam (NL); DE RUITER, Gerhard Adriaan, NL-5473 JE Heeswijk-Dinther (NL); BERG, Hijlkeline Eppone, NL-3331 BT Zwijndrecht (NL)
(74) Representative: Swinkels, Bart Willem
(86) International application number: PCT/NL2010/050411
(87) International publication number: WO 2011/005081

(56) References cited:
- WO-A1-2008/104381
- WO-A1-2010/039267
- US-B1- 6 187 355
- DATABASE WPI Week 197646 Thomson Scientific, London, GB; AN 1976-85773X XP2010685 & JP 51 109908 A (ASAHI ELECTROCHEMICAL CO LTD) 29 September 1976 (1976-09-29)
- BEL-RHLID, R.; TALMON, J. P.; FAY, L. B.; JUILLERAT, M. A.: "Biodegradation of 3-Chloro-1,2,-propanediol with Saccharomyces cerevisiae" JOURNAL OF AGRICULTURAL AND FOOD CHEMISTRY, vol. 52, no. 20, 10 September 2004 (2004-09-10), pages 6165-6169, XP002605755
- ZELINKOVA, Z.; DOLEZAL, M.; VELISEK, J.: "Occurrence of 3-chloropropane-1,2-diol fatty acid esters in infant and baby foods" EUROPEAN FOOD RESEARCH AND TECHNOLOGY, vol. 228, no. 4, 15 October 2008 (2008-10-15), pages 571-578, XP002605756

## Description

### TECHNICAL FIELD OF THE INVENTION

The present invention relates to a process for removing unwanted propanol components from unused triglyceride oil, said unwanted propanol components being selected from free chloropropanols, chloropropanol fatty acid esters, free epoxypropanols, epoxypropanol fatty acid esters, and combinations thereof The present method comprises the steps of contacting a deodorized triglyceride oil that is contaminated with the aforementioned unwanted propanol components with an adsorbent, followed by the recovery of a decontaminated triglyceride oil having a reduced concentration of the unwanted propanol components

### BACKGROUND OF THE INVENTION

Free 3-monochloropropane-1,2-diol (3-MCPD) has been identified as a contaminant for a long time in various foods like liquid seasoning or bakery goods heated to high temperatures. This substance is formed when fat- and salt-containing foods are processed at high temperatures. In animal experiments 3-MCPD has led to an increase in the cell count (hyperplasia) in renal tubules and, at higher levels, it triggered benign tumours. No genotoxic effect was observed. It can, therefore, be assumed that the tumours observed in the long-term animal study (mainly benign) only occur above a threshold value. There are no findings from human studies.

Recent studies have identified 3-MCPD fatty acid esters in refined edible fats and in fat-containing foods. 3-MCPD esters are compounds of 3-MCPD and various fatty acids which are formed at high temperatures under hydration following a reaction between fats and chloride ions. Studies by the food control authorities in Baden-Württemberg showed that all refined vegetable oils and fats contain 3-MCPD fatty acid esters. Only oil that had not undergone any heat treatment (e.g. native olive oil) did not contain the substance.

3-MCPD fatty acid esters are formed at high temperatures, probably during the deodorisation of edible fats and oils, the last stage in refinement, during which undesirable odorous and taste-bearing substances are removed. Besides 3-MCPD fatty acid esters also 1,3-dichloropropane-2-ol (1,3-DCPO) fatty acid esters have been identified in heat processed foods.

It has been hypothesized that 2,3-epoxy-1-propanol is an important intermediate in the formation of 3-MCPD and 1,3-DCPO. It is plausible that the same holds for the fatty acid esters of these propanols.

No toxicological data are available on 3-MCPD fatty acid esters, nor for that matter on any of the other above mentioned propanol fatty acid esters. Nonetheless, it would be desirable to have available a simple, mild, but effective process for the removal of these unwanted propanol fatty acid esters.

The use of baker's yeast to remove 3-chloro-1,2-propane diol from foods is disclosed in the Journal of Agricultural and Food Chemistry, Volume 52 (20), Bel-Rhlid et al.

European Food Research and Technology, Volume 228 (4), Zelinkova et al, describes palm oils having a 3-MCPD content equivalent to 1390-4170 µg per kg of non-esterified 3-MCPD.

PCT Patent Application WO-A-2008/104381 relates to an infant formula comprising a palm oil.

### SUMMARY OF THE INVENTION

The inventors have developed a process that enables the effective removal of chloropropanol components from triglyceride oils, said unwanted propanol components being selected from free chloropropanols, chloropropanol fatty acid esters, free epoxypropanols, epoxypropanol fatty acid esters, and combinations thereof, and said process comprising:
- contacting a deodorized triglyceride oil that is contaminated with unwanted propanol components with a silicate adsorbent selected from the group consisting of magnesium silicate, calcium silicate, aluminum silicate and combinations of these silicates; and
- recovering a decontaminated triglyceride oil having a reduced concentration of the unwanted propanol components.

The present process is used to treat unused triglyceride oil in order to remove the unwanted propanol components before the oil is used in food preparation.

The use of silicate adsorbents for regenerating used frying oils is known and described in the following patent documents: US 4,681,769 (Reagent Chemical & Research Company); US 4,735,815 (Harshaw/Filtrol); US 5,597,600 (The Dallas Group of America); US 6,187,355 (The University of Georgia Research Foundation, Inc.); US 2007/0154602 (Michael C. Withiam).

The oil refining process of the present invention offers the advantage that it enables the selective removal of the unwanted propanol components. Free fatty acid levels, for instance, are not greatly affected by the present process. The present process can be carried out using standard equipment that is readily available in oil processing factories. Furthermore, the present process can be carried out under mild conditions, e.g. at relatively low temperatures. Finally, the present process offers the advantage that it does not adversely effect the stability of the triglyceride oil

The present invention also encompasses the use of the aforementioned silicate adsorbent for reducing the concentration of unwanted propanol components in triglyceride oils, said unwanted propanol components being selected from free chloropropanols, chloropropanol fatty acid esters, free epoxypropanols, epoxypropanol fatty acid esters, and combinations thereof.

### DETAILED DESCRIPTION OF THE INVENTION

Accordingly, one aspect of the present invention relates to process for removing unwanted propanol components from unused triglyceride oil, said unwanted propanol components being selected from free chloropropanols, chloropropanol fatty acid esters, free epoxypropanols, epoxypropanol fatty acid esters, and combinations thereof, and said process comprising:
- contacting a deodorized triglyceride oil that is contaminated with unwanted propanol components with a silicate adsorbent selected from the group consisting of magnesium silicate, calcium silicate, aluminum silicate and combinations of these silicates; and
- recovering a decontaminated triglyceride oil having a reduced concentration of the unwanted propanol components

The term "oil" whenever used herein encompasses both oils that are liquid at ambient temperature and oils that are solid at ambient temperature (fats).

The term "unused" as used herein in relation to triglyceride oil refers to a triglyceride oil that has not been used in the preparation of food, e.g. as a frying medium.

In the present process the contacting of the contaminated triglyceride oil with the silicate adsorbent may be realized by mixing liquid or liquefied triglyceride oil with a particulate silicate adsorbent. Alternatively, the contacting (and subsequent recovery) may be achieved by passing the contaminated triglyceride oil through a porous bed of silicate adsorbent.

The present process advantageously employ a highly porous silicate adsorbent. Preferably, the silicate adsorbent has a surface area (B.E.T.) of at least 100 m²/g, more preferably the silicate adsorbent has a surface area (B.E.T.) of 200-800 m²/g.

According to another preferred embodiment the silicate employed is a particulate material. Typically, the silicate adsorbent is a powder having a mass weighted average diameter in the range of 3-200 µm. Even more preferably the powder has a mass weighted average diameter in the range 20-150 µm, most preferably in the range of 50-100 µm.

Particularly good results can be obtained with the present process when a neutral or basic silicate adsorbent is employed. Thus, in accordance with a preferred embodiment of the invention the silicate adsorbent has a pH of 7-10.8, more preferably a pH of 7.8-10.0, said pH being measured in a 10% (w/w) suspension of the silicate adsorbent in water.

The present process can use different types of silicate adsorbents, of which magnesium silicate is most preferred. In accordance with a particularly preferred embodiment, the magnesium silicate is an amorphous synthetic magnesium silicate, preferably an amorphous synthetic hydrous magnesium silicate.

The magnesium silicate employed in accordance with the present invention preferably contains at least 8 wt.% MgO and at least 40 wt.% SiO₂ on an ignited basis. Even more preferably, the magnesium silicate contains 12% MgO and at least 50% SiO₂ on an ignited basis. Typically, MgO and SiO₂ together represent at least 60 wt.% of the magnesium silicate.

In accordance with another preferred embodiment, the magnesium silicate contains MgO and SiO₂ in a mole ratio of 1:1.3 to 1:5, more preferably in a mole ratio of 1:1.8 to 1:4.

The magnesium silicate used in accordance with the invention typically exhibits a loss on drying at 105 °C of not more than 20 wt.%, more preferably of not more than 15%.

The magnesium silicate suitably exhibits a loss on ignition at 900 °C (dry basis) of not more than 20 wt.%, more preferably of not more than 20%.

The benefits of the present process are particularly evident in case the contaminated triglyceride oil contains substantial levels of unwanted chloropropanol components. Thus, in a particularly advantageous embodiment of the invention the contaminated oil contains the unwanted chloropropanol components in a concentration that is equivalent to at least 100 µg/kg, more preferably at least 200 µg/kg, and most preferably at least 300 µg/kg of non-esterified chloropropanol components. A suitable analytical method for determining the latter concentration is described in R.Weisshaar, "Determination of total 3-chloropropane-1,2-diol (3-MACPD) in edible oils by cleavage of MCPD esters with sodium methoxide", Eur. J. Lipid Sci. Technol. (2008) 110, 183-186. Improved analytical methods for the quantitative determination of 3-MCPD in triglyceride oils are currently being developed and validated.

In the present process the concentration of unwanted chloropropanol components is advantageously reduced to a level that is below the equivalent of 300 µg/kg of non-esterified chloropropanol components. More preferably, the present process yields a decontaminated triglyceride oil containing chloropropanol components in a concentration that is below the equivalent of 200 µg/kg, even more preferably below the equivalent of 100 µg/kg, and most preferably below the equivalent of 50 µg/kg of non-esterified chloropropanol components.

In accordance with a particularly beneficial embodiment of the invention, the unwanted propanol components that are removed by the present process are selected from the group consisting of 3-monochloropropane-1,2-diol (3-MCPD), 2-monochloropropane-1,3-diol (2-MCPD), 1,3-dichloropropane-2-ol (1,3-DCPO) and 1,2-dichloropropane-3-ol (1,2-DCPO), 3-MCPD fatty acid esters, 2-MCPD fatty acid esters, 1,3-DCPO fatty acid esters, 1,2-DCPO fatty acid esters and combinations thereof. Even more preferably, the unwanted propanol components are selected from 2-MCPD fatty acid esters, 3-MCPD fatty acid esters, 1,3 DCPO fatty acid esters and 1,2-DCPO fatty acid esters and combinations thereof. Most preferably, the unwanted propanol components are 3-MCPD fatty acid esters.

In the present process the total MCPD fatty acid ester content of the triglyceride oil is usually reduced by at least 30%, most preferably it is reduced by at least 50%; said reduction corresponding to the decrease in MCPD fatty acid ester content that is achieved in the decontaminated triglyceride oil relative to the contaminated triglyceride oil starting material. Here "the total MCPD fatty acid ester content" refers to the cumulative concentration of 3-MCPD fatty acid esters and 2-MCPD fatty acid esters. According to a particularly preferred embodiment of the present process, the 3-MCPD content of the triglyceride oil is reduced by at least 50%.

The total DCPO fatty acid ester content of the triglyceride oil is typically reduced by at least 30%, and most preferably by at least 50%. Here "the total DCPO fatty acid ester content" refers to the cumulative concentration of 1,3-DCPO fatty acid esters and 1,2-DCPO fatty acid esters.

The present method enables the effective removal of epoxypropanol components, e.g. epoxypropanol components selected from the group consisting of 2,3-epoxy-1-propanol, 2,3-epoxy-1-propanol fatty acid esters and combinations thereof. The latter epoxypropanol components are believed to be important intermediates in the formation of chloropropanols. It has been shown that in the presence of water and chloride ions, 2,3-epoxy-1-propanol is rapidly converted in 3-MCPD. Thus, removal of the epoxypropanol components from triglyceride oil can prevent the formation of chloropropanol components.

As explained herein before, the present process offers the advantage that it enables the selective removal of unwanted propanol components. Thus, unexpectedly the levels of free fatty acids are not greatly affected by the present process. Accordingly, in the present process the free fatty acid content of the decontaminated triglyceride oil is preferably not more than 0.5 wt.% lower than the free fatty acid content of the contaminated triglyceride oil. Likewise, in the present process the free fatty acid content of the triglyceride oil is preferably reduced by not more than 60%, more preferably by not more than 50% and most preferably by not more than 40%.

The triglyceride oil that is treated in accordance with the present process typically contains at least 80 wt.%, more preferably at least 90 wt.% of triglycerides.

The present process is suitably carried out in an oil processing plant, e.g as one of the final stages of oil refining. The present process uses a deodorized contaminated triglyceride oil as a starting material as the level of unwanted propanol components is especially high in deodorized triglyceride oils.

As explained herein before, the present process is used to remove unwanted propanol components from contaminated triglyceride oil, before the triglyceride oil is used in the preparation of foods. Thus, the contaminated triglyceride oil that is used a starting material in the process is not a used cooking oil.

The contaminated triglyceride oil that is employed in the present process further exhibits at least one, preferably at least two, and most preferably all three of the following features:
- a free fatty acid content of less than 1.5 %, more preferably a free fatty acid content of less than 0.5%;
- less than 0.5 wt.% of polymeric material;
- a Food Oil Sensor reading of less than 0.2.
Methods for determining the above mentioned analytical parameters have been described, for instance, by Lin et al., "The Recovery of Used Frying Oils with Various Adsorbents", J. of Food Lipids 5 (1998), 1016.

The present process can suitably be used to remove unwanted propanol components from animal oils, marine oils, algae oils and vegetable oils. Preferably, the triglyceride oil employed is vegetable oil. Even more preferably, the triglyceride oil is a vegetable oil selected from palm oil, palm kernel oil, coconut oil, sunflower oil, soybean oil, rapeseed oil and combinations thereof. Most preferably, the triglyceride oil is palm oil.

The contact time between triglyceride oil and the silicate adsorbent in the present process typically lies in the range 5-200 minutes, more preferably in the range of 10-60 minutes.

Best results are obtained in the present process if the triglyceride oil is contacted with the silicate adsorbent at elevated temperatures. Preferably, the contaminated triglyceride oil has a temperature of 80-260 °C when it is contacted with the silicate adsorbent.

The amount of silicate adsorbent employed in the present process typically exceed 0.1 % by weight of the contaminated triglyceride oil Preferably, the amount of silicate adsorbent lies within the range of, 0.3-10%, most preferably in the range of 0.5-5% by weight of the contaminated triglyceride oil.

Another aspect of the invention relates to the use a silicate adsorbent as defined herein before for reducing the concentration of unwanted propanol components in triglyceride oils, said unwanted propanol components being selected from free chloropropanols, chloropropanol fatty acid esters, free epoxypropanols, epoxypropanol fatty acid esters, and combinations thereof.

A further aspect of the inventions relates to a deodorized triglyceride oil selected from palm oil, a palm oil fraction or a combination thereof, said deodorized triglyceride oil being characterized by a 3-MCPD content that is less than the equivalent of 300 µg/kg of non-esterified 3-MCPD. Even more preferably the 3-MCPD of the deodorized triglyceride oil is less than the equivalent of 200 µg/kg of non-esterified 3-MCPD. even more preferably less than the equivalent of 100 µg/kg of non-esterified 3-MCPD. Most preferably, the 3-MCPD of the deodorized triglyceride oil is even less than the equivalent of 50 µg/kg of non-esterified 3-MCPD.

As explained herein, before, deodorisation of triglyceride oils, such as palm oil and palm oil fractions, is believed to trigger the formation of chloropropanols. The present invention enables the production of deodorized palm oils and deodorized palm oil fractions that contain very low concentrations of 3-MCPD. The term "palm oil fraction" as referred to herein refers to e.g. olein or stearin fractions that can be isolated from palm oil (or fraction, of palm oil) by means of fractionation (e.g. solvent fractionation or dry fractionation).

Yet another aspect of the invention relates to an infant food comprising from 0.3-80 wt.%, preferably 0.5-40 wt.%, most preferably 1-15 wt.% of a deodorized triglyceride oil as defined above. The infant food according to the present invention is typically designed for consumption by infants that are no older than 12 months, especially no older than 6 months.

According to a particularly preferred embodiment, the infant food is an infant formula. Infant formula is an artificial substitute for human breast milk, intended for infant consumption. The infant formula of the present invention may be provided in liquid or instant form.

The invention is further illustrated by means of the following non-limiting examples.

### EXAMPLES

### Example 1

Deodorised, dry palm oil super olein (IV=64) containing more than 300 µg/kg of 3-MCPD was treated with Dalsorb® F50, a synthetic, amorphous magnesium silicate that is marketed by the Dallas Group of America, Whitehouse, NJ, USA.

The oil (464.3 g) was heated to 95 °C in a stirred vessel, following which the magnesium silicate adsorbent (9.3 g) was added under stirring (850 rpm). Pressure was reduced to 100 mbar, the temperature of the oil maintained at 95 °C and stirring was continued for 30 minutes (850 rpm), following which the adsorbent was removed by filtration.

It was found that the amount of 3-MCPD in the oil had been reduced by more than 50% as a result of the treatment with the magnesium silicate adsorbent. Results further indicate that this methodology enables the reduction of 3-MCPD levels to less than 50 µg/kg.

### Example 2

Deodorised, dry palm oil super olein (IV=64) containing more than 300 µg/kg of 3-MCPD was treated with D-sol D60 a Magnesol® product, a synthetic, amorphous magnesium silicate that is marketed by the Dallas Group of America, Whitehouse, NJ, USA.

The oil (410.1 g) was heated to 95 °C in a stirred vessel, following which the magnesium silicate adsorbent (8.2 g) was added under stirring (850 rpm). Pressure was reduced to 100 mbar, the temperature of the oil maintained at 95 °C and stirring was continued for 30 minutes (850 rpm), following which the adsorbent was removed by filtration.

It was found that the amount of 3-MCPD in the oil had been reduced by more than 50% as a result of the treatment with the magnesium silicate adsorbent. Results further indicate that this methodology enables the reduction of 3-MCPD levels to less than 50 µg/kg.

### Example 3

Deodorised, dry palm oil super olein (IV=64) containing more than 300 µg/kg of 3-MCPD was treated with 3000 M a Magnesol® product, a synthetic, amorphous magnesium silicate that is marketed by the Dallas Group of America, Whitehouse, NJ, USA.

The oil (445.4 g) was heated to 95 °C in a stirred vessel, following which the magnesium silicate adsorbent (8.9 g) was added under stirring (850 rpm). Pressure was reduced to 100 mbar, the temperature of the oil maintained at 95 °C and stirring was continued for 30 minutes (850 rpm), following which the adsorbent was removed by filtration.

It was found that the amount of 3-MCPD in the oil had been reduced by more than 50% as a result of the treatment with the magnesium silicate adsorbent. Results further indicate that this methodology enables the reduction of 3-MCPD levels to less than 50 µg/kg.

## Claims

1. A process for removing unwanted propanol components from unused triglyceride oil, said unwanted propanol components being selected from free chloropropanols, chloropropanol fatty acid esters, free epoxypropanols, epoxypropanol fatty acid esters, and combinations thereof, and said process comprising:
• contacting a deodorized triglyceride oil that is contaminated with unwanted propanol components with a silicate adsorbent selected from the group consisting of magnesium silicate, calcium silicate, aluminum silicate and combinations of these silicates; and
• recovering a decontaminated triglyceride oil having a reduced concentration of the unwanted propanol components.

2. Process according to claim 1, wherein the silicate adsorbent has a surface area (B.E.T.) of at least 100 m²/g, preferably of 200-800 m²/g.

3. Process according to claim 1 or 2, wherein the silicate adsorbent is a powder having a mass weighted average diameter in the range of 3-200 µm, preferably in the range 20-150 µm, more preferably in the range of 50-100 µm.

4. Process according to any one of the preceding claims, wherein the silicate adsorbent has a pH of 7-10.8, preferably of 7.8-10.0 (suspension of 10% (w/w) in water).

5. Process according to any one of the preceding claims, wherein the silicate adsorbent is magnesium silicate.

6. Process according to claim 5, wherein the magnesium silicate contains at least 12% MgO and at least 50% SiO₂ on an ignited basis.

7. Process according to claim 5 or 6, wherein the magnesium silicate contains MgO and SiO₂ in a mole ratio of 1:1.3 to 1:5, preferably in a mole ratio of 1:1.8 to 1:4.

8. Process according to any one of the preceding claims, wherein the unwanted propanol components are selected from the group consisting of 3-monochloropropane-1,2-diol (3-MCPD), 2-monochloropropane-1,3-diol (2-MCPD), 1,3-dichloropropane-2-ol (1,3-DCPO) and 1,2-dichloropropane-3-ol (1,2-DCPO), 3-MCPD fatty acid esters, 2-MCPD fatty acid esters, 1,3-DCPO fatty acid esters, 1,2-DCPO fatty acid esters and combinations thereof

9. Process according to any one of the preceding claims, wherein the total MCPD fatty acid ester content of the triglyceride oil is reduced by at least 30%, preferably by at least 50%.

10. Process according to any one of the preceding claims, wherein the free fatty acid content of the decontaminated triglyceride oil is not more than 0.5 wt.% lower than the free fatty acid content of the contaminated triglyceride oil.

11. Process according to any one of the preceding claims, wherein the contaminated triglyceride oil is not a used cooking oil.

12. Process according to any one of the preceding claims, wherein the contaminated triglyceride oil has a free fatty acid content of less than 1.5 %.

13. Process according to any one of the preceding claims, wherein the contaminated triglyceride oil contains less than 0.5 wt.% of polymeric material.

14. Use of a silicate adsorbent as defined in any one of claims 1-7 for reducing the concentration of unwanted propanol components in triglyceride oils, said unwanted propanol components being selected from free chloropropanols, chloropropanol fatty acid esters, free epoxypropanols, epoxypropanol fatty acid esters, and combinations thereof.

15. A deodorized triglyceride oil selected from palm oil, a palm oil fraction or a combination thereof, said deodorized triglyceride oil being **characterized by** a 3-MCPD content that is equivalent to less than 300 µg/kg of non-esterified 3-MCPD, preferably equivalent to less than 200 µg/kg of non-esterified 3-MCPD and even more preferably is equivalent to less than 100 µg/kg of non-esterified 3-MCPD..

16. An infant food comprising from 0.3-80 wt.% of a deodorized triglyceride oil according to claim 15.

17. Infant food according to claim 16, wherein the infant food is an infant formula.

## Patentansprüche

1. Ein Verfahren zur Beseitigung unerwünschter Propanolbestandteile aus unbenutztem Triglyceridöl, wobei die unerwünschten Propanolbestandteile ausgewählt sind aus freien Chlorpropanolen, Chlorpropanolfettsäureestem, freien Epoxypropanolen, Epoxypropanolfettsäureestern und Kombinationen davon, und wobei das Verfahren umfasst:
- in Kontakt bringen eines desodorierten Triglyceridöls, das mit unerwünschten Propanolbestandteilen kontaminiert ist, mit einem Silicat-Adsorptionsmittel, ausgewählt aus der Gruppe bestehend aus Magnesiumsilicat, Calciumsilicat, Aluminiumsilicat und Kombinationen dieser Silicate, und
- Gewinnen eines dekontaminierten Triglyceridöls mit einer reduzierten Konzentration der unerwünschten Propanolbestandteile.

2. Verfahren gemäß Anspruch 1, wobei das Silicat-Adsorptionsmittel einen Oberflächenbereich (BET) von mindestens 100 m²/g, bevorzugt von 200-800 m²/g, aufweist.

3. Verfahren gemäß Anspruch 1 oder 2, wobei das Silicat-Adsorptionsmittel ein Pulver mit einem massengewichteten mittleren Durchmesser im Bereich von 3 - 200 µm, bevorzugt im Bereich von 20 - 150 µm, stärker bevorzugt im Bereich von 50 - 100 µm, ist.

4. Verfahren gemäß einem der vorhergehenden Ansprüche, wobei das Silicat-Adsorptionsmittel einen pH von 7 bis 10,8, vorzugsweise von 7,8 bis 10,0 aufweist (Suspension von 10% (Gew./Gew.) in Wasser).

5. Verfahren gemäß einem der vorhergehenden Ansprüche, wobei das Silicat-Adsorptionsmittel Magnesiumsilicat ist.

6. Verfahren gemäß Anspruch 5, wobei das Magnesiumsilicat mindestens 12% MgO und mindestens 50% SiO₂ enthält, bezogen auf eine geglühte Basis.

7. Verfahren gemäß Anspruch 5 oder 6, wobei das Magnesiumsilicat MgO und SiO₂ in einem Molverhältnis von 1:1,3 bis 1:5, vorzugsweise in einem Molverhältnis von 1:1,8 bis 1:4 enthält.

8. Verfahren gemäß einem der vorangehenden Ansprüche, wobei die unerwünschten Propanolbestandteile ausgewählt sind aus der Gruppe bestehend aus 3-Monochlorpropan-1,2-diol (3-MCPD), 2-Monochlorpropan-1,3-diol (2-MCPD), 1,3-Dichlorpropan-2-ol (1,3-DCPO) und 1,2-Dichlorpropan-3-ol (1,2-DCPO), 3-MCPD-Fettsäureestern, 2-MCPD-Fettsäureestem, 1,3-DCPO-Fettsäureestern, 1,2-DCPO-Fettsäureestern und Kombinationen davon.

9. Verfahren gemäß einem der vorhergehenden Ansprüche, wobei der Gesamtgehalt an MCPD-Fettsäureestern des Triglyceridöls um mindestens 30%, vorzugsweise um mindestens 50% reduziert wird.

10. Verfahren gemäß einem der vorhergehenden Ansprüche, wobei der Gehalt an freien Fettsäuren des dekontaminierten Triglyceridöls nicht mehr als 0,5 Gew.% niedriger als der Gehalt an freien Fettsäuren des kontaminierten Triglyceridöls ist.

11. Verfahren gemäß einem der vorhergehenden Ansprüche, wobei das kontaminierte Triglyceridöl kein gebrauchtes Speiseöl ist.

12. Verfahren gemäß einem der vorhergehenden Ansprüche, wobei das kontaminierte Triglyceridöl einen Gehalt an freien Fettsäuren von weniger als 1,5% hat.

13. Verfahren gemäß einem der vorhergehenden Ansprüche, wobei das kontaminierte Triglyceridöl weniger als 0,5 Gew.% an polymerem Material enthält.

14. Verwendung eines Silicat-Adsorptionsmittels wie in einem der Ansprüche 1 - 7 definiert zur Verringerung der Konzentration von unerwünschten Propanolbestandteilen in Triglyceridölen, wobei die unerwünschten Propanolbestandteile ausgewählt sind aus freien Chlorpropanolen, Chlorpropanolfettsäureestem, freien Epoxypropanolen, Epoxypropanolfettsäureestern und Kombinationen davon.

15. Ein desodoriertes Triglyceridöl, ausgewählt aus Palmöl, einer Palmölfraktion oder einer Kombination davon, wobei das desodorierte Triglyceridöl durch einen 3-MCPD-Gehalt gekennzeichnet ist, der weniger als 300 µg/kg des nicht veresterten 3-MCPD entspricht, vorzugsweise weniger als 200 µg/kg des nicht veresterten 3-MCPD entspricht und noch mehr bevorzugt weniger als 100 µg/kg des nicht veresterten 3-MCPD entspricht.

16. Eine Kleinkindnahrung, umfassend 0,3 - 80 Gew.% eines desodorierten Triglyceridöls gemäß Anspruch 15.

17. Kleinkindnahrung gemäß Anspruch 16, wobei die Kleinkindnahrung eine Kleinkindfertignahrung ist.

## Revendications

1. Procédé pour éliminer des composants du propanol non souhaités à partir d'une huile de triglycérides non utilisée, lesdits composants du propanol non souhaités étant choisis parmi les chloropropanols libres, les esters d'acides gras de chloropropanols, les epoxypropanols libres, les esters d'acides gras d'epoxypropanols et les combinaisons de ceux-ci et ledit procédé comprenant :
- la mise en contact d'un désodorisant d'huile de triglycérides qui est contaminée par des composants du propanol non souhaités avec un adsorbant à base de silicate choisi dans le groupe consistant en du silicate de magnésium, du silicate de calcium, du silicate d'aluminium et les combinaisons de ces silicates, et
- la récupération d'une huile de triglycérides décontaminée ayant une concentration réduite en composants du propanol non souhaités.

2. Procédé selon la revendication 1, dans lequel l'adsorbant à base de silicate a une surface (B.E.T) d'au moins 100 m²/g, de préférence de 200 à 800 m²/g.

3. Procédé selon la revendication 1 ou la revendication 2, dans lequel l'adsorbant à base de silicate est une poudre ayant un diamètre moyen pondéré allant de 3-200 µm, de préférence allant de 20-150 µm et de manière encore plus préférée allant de 50-100 µm.

4. Procédé selon l'une des revendications précédentes, dans lequel l'adsorbant à base de silicate a un pH de 7-10.8, de préférence de 7.8-10.0 (suspension de 10% (poids/poids) dans l'eau).

5. Procédé selon l'une des revendications précédentes, dans lequel l'adsorbant à base de silicate est du silicate de magnésium.

6. Procédé selon la revendication 5, dans lequel le silicate de magnésium contient au moins 12% de MgO et au moins 50% de SiO₂ en produit sec.

7. Procédé selon la revendication 5 ou la revendication 6, dans lequel le silicate de magnésium contient du MgO et du SiO₂ dans un rapport molaire allant de 1 :1.3 à 1 :5 ; de préférence dans un rapport molaire allant de 1 :1.8 à 1 :4.

8. Procédé selon l'une des revendications précédentes, dans lequel les composants du propanol non souhaités sont choisis parmi le groupe consistant en du 3-monochloropropanol-1,2 diol (3-MCPD), du 2-monochloropropane-1,3-diol (2-MCPD), du 1,3-dichloropropane-2-ol (1,3-DCPO) et du 1,2-dichloropropane-3-ol (1,2-DCPO), des esters d'acides gras du 3-MCPD, des esters d'acides gras du 2-MCPD, des esters d'acides gras du 1,3-DCPO, des esters d'acides gras du 1,2-DCPO et les combinaisons de ceux-ci.

9. Procédé selon l'une des revendications précédentes, dans lequel la teneur en esters d'acides gras MCPD totaux de l'huile de triglycérides est réduite d'au moins de 30%, de préférence d'au moins 50%.

10. Procédé selon l'une des revendications précédentes, dans lequel la teneur en acides gras libres de l'huile de triglycérides décontaminée n'est pas inférieure de plus de 0.5% en poids à la teneur en acides gras libres de l'huile de triglycérides contaminée.

11. Procédé selon l'une des revendications précédentes, dans lequel l'huile de triglycérides contaminée n'est pas une huile utilisée en cuisine.

12. Procédé selon l'une des revendications précédentes, dans lequel l'huile de triglycérides contaminée a une teneur en acides gras libres inférieure à 1.5%

13. Procédé selon l'une des revendications précédentes, dans lequel l'huile de triglycérides contaminée contient moins de 0.5% en poids de matière polymérique.

14. Utilisation d'un adsorbant à base de silicate tel que défini dans l'une des revendications 1 à 7, pour la réduction de la concentration en composants du propanol non souhaités dans des huiles de triglycérides, lesdits composants du propanol non souhaités étant sélectionnés parmi les chloropropanols, les esters d'acides gras de chloropropanol, les epoxypropanols libres, les esters d'acides gras d'epoxypropanols et les combinaisons de ceux-ci.

15. Huile de triglycérides désodorisée choisie parmi l'huile de palme, une fraction d'huile de palme ou une combinaison de celles-ci, ladite huile de triglycérides désodorisée étant **caractérisée par** une teneur en 3-MCPD qui est équivalente à moins de 300 µg/kg de 3-MCPD non estérifié, de préférence est équivalente à moins de 200 µg/kg de 3-MCPD non estérifié et de manière encore plus préférée est équivalente à moins de 100 µg/kg de 3-MCPD non estérifié.

16. Aliment pour nourrisson comprenant 0.3 à 80% en poids d'une huile de triglycérides désodorisée selon la revendication 15.

17. Aliment pour nourrisson selon la revendication 16, dans laquelle l'aliment pour nourrisson est une préparation pour nourrisson.
